# NEUE EUROPÄISCHE PATENTSCHRIFT

(11) **EP 2 761 985 B2**
(45) Veröffentlichungstag und Bekanntmachung des Hinweises auf die Entscheidung über den Einspruch: **16.10.2019**
(45) Hinweis auf die Patenterteilung: 11.01.2017
(21) Anmeldenummer: 13192641.2
(22) Anmeldetag: 13.11.2013
(51) Int. Cl.: A01D 43/08

(54) **Selbstfahrende landwirtschaftliche Erntemaschine, insbesondere Feldhäcksler**
Self-propelled agricultural harvester, in particular forage harvester
Moissonneuse automotrice, notamment ramasseuse-hâcheuse

(30) Priorität: 01.02.2013 DE 102013101016
(43) Veröffentlichungstag der Anmeldung: 06.08.2014
(73) Patentinhaber: CLAAS Selbstfahrende Erntemaschinen GmbH, 33428 Harsewinkel (DE)
(72) Erfinder: Pollklas, Manfred, 33378 Rheda-Wiedenbrück (DE)
(74) Vertreter: CLAAS Gruppe

(56) Entgegenhaltungen:
- EP-A1- 2 165 591
- EP-A1- 2 316 259
- EP-A2- 2 524 586
- DE-A1- 10 064 861
- DE-A1- 10 064 862
- DE-A1- 10 119 279
- DE-A1-102009 028 175

## Beschreibung

Die Erfindung betrifft eine selbstfahrende landwirtschaftliche Erntemaschine gemäß dem Oberbegriff des Anspruchs 1.

Selbstfahrende Erntemaschinen wie insbesondere Feldhäcksler werden während der Ernteperiode aus Wirtschaftlichkeitsgründen zumeist auf einer Vielzahl von Feldern eingesetzt. Die Fahrer müssen mit der Maschine daher vielfach von einer bearbeiteten Ackerfläche zur nächsten fahren, um dort einen neuen Ernteeinsatz zu beginnen.

Aus der EP 2 316 259 A1 ist ein selbstfahrender Feldhäcksler bekannt, welcher einen an einem an dem Feldhäcksler angeordneten Vorsatzgerät angebrachten Sensor aufweist, der in verschieden beabstandete Positionen in Bezug auf eine Längsmittelebene des Feldhäckslers bringbar ist.

Beim sogenannten "Anschneiden" eines Feldes, d.h. der ersten Erntefahrt über den gewachsenen Pflanzenbestand eines Feldes, ist stets eine besonders hohe Aufmerksamkeit des Fahrers erforderlich. Zum einen muss er beobachten, ob sich behindernde Objekte jedweder Art (Steine, Begrenzungseinrichtungen, Abfälle, Unebenheiten, ggf. Lebewesen) am noch schwer einsehbaren Fahrweg befinden, die zu einer Beschädigung des Erntevorsatzes führen könnten. Daneben muss er auch den Oberladevorgang beobachten und kontrollieren. Bei einem Feldhäcksler beinhaltet dies die Sichtkontrolle des durch eine Überladeeinrichtung (auch genannt: "Auswurfkrümmer") stattfindenden Erntegutauswurfs auf ein mitfahrendes Transportfahrzeug einschließlich einer laufend vorzunehmenden, wohl dosierten Einstellung der Überladeeinrichtung, um das Transportfahrzeug mit dem Erntegutstrahl zu treffen und somit Erntegutverluste zu vermeiden. Da in den meisten Fällen aus Platzgründen der Überfadevorgang beim Anschneiden nach hinten erfolgt, muss der Fahrer folglich sowohl nach vorn (Erntevorsatz) als auch nach hinten (Überladevorgang) blicken.

Aufgrund der besonderen Einsatzbedingungen beim Anschneiden des Feldes (u.a. Überladung nach hinten, schlechte Einsehbarkeit des Fahrwegs, erste Inbetriebnahme der Erntemaschine auf neuem Feld) muss der Fahrer verschiedene Parameter der Erntemaschine zumeist anders einstellen als beim (späteren) Erntebetrieb auf dem angeschnittenen Feld. So werden zum Anschneiden in der Regel Automatikfunktionen wie beispielsweise Tempomat, Überladeautomatik deaktiviert und/oder werden für die Schnitthöhe oder die Motordrehzahl andere Einstellungen gewählt. Da die Ernte zumeist unter Zeitdruck durchgeführt wird und der Fahrer neben der eigenen Maschine oft auch den Betrieb der begleitenden Transportfahrzeuge koordinieren oder zumindest beachten muss, ist das Einstellen der Erntemaschine für den Feldanschnitt mühsam und zudem fehlerträchtig. Vergisst der Fahrer, eine wichtige Einstellung vorzunehmen, treten leicht Erntegutverluste, Qualitätsverluste oder gar Beschädigungen durch Unfälle auf. Aus diesen Gründen wird die Erntemaschine beim Feldanschneiden regelmäßig unter großer Vorsicht und nur unter teilweise Auslastung gefahren.

Vor diesem Hintergrund ist es eine Aufgabe der vorliegenden Erfindung, den Fahrer der Erntemaschine zu Beginn des Ernteeinsatzes auf einem unbearbeiteten Feld zu entlasten und den Erntevorgang auch für ungeübte Fahrer von Beginn an sicherer und effizienter zu gestalten.

Die Aufgabe wird gelöst durch eine Erntemaschine mit den Merkmalen des Anspruchs 1. Diese zeichnet sich aus durch eine Steuerungseinrichtung, die in einem Feldanschneidemodus betreibbar ist, um für wenigstens eine der Funktionseinrichtungen zumindest eine Parametereinstellung vorzugeben, mit welcher die Erntemaschine in eine zum Anschneiden des Feldes geeignete Konfiguration bringbar ist.

Durch die erfindungsgemäß vorgesehene Vorgabe von Parametereinstellungen für die wenigstens eine Funktionseinrichtung wird dem Fahrer eine einfache und sichere Möglichkeit bereitgestellt, die Erntemaschine von einer beliebigen vorigen Konfiguration schnell für die Erntesituation "Anschneiden eines Feldes", d.h. das erste Befahren eines mit Pflanzenbestand bewachsenes Feldes, in eine geeignete Konfiguration zu versetzen. Beliebige an der Erntemaschine vorhandene Funktionseinrichtungen können durch Aktivierung des Feldanschneidemodus so - beispielsweise per Knopfdruck - mit anderen Parametereinstellungen genutzt werden, wobei es für den Fahrer nicht erforderlich ist, diese Parameter im Einzelnen und für jede Funktionalität der Maschine durchzuführen. Durch die erfindungsgemäße vorgesehene Parametervorgabe entfällt für den Fahrer in der Erntesituation "Feldanschneiden" demnach das manuelle Verstellen einer (zumeist) Vielzahl von Parametern, so dass sich eine deutliche Entlastung ergibt. Damit erhöht sich auch die Sicherheit und Effizienz des Erntevorgangs. Die eingangs gestellte Aufgabe wird somit gelöst.

Schon an dieser Stelle sei angemerkt, dass sich entsprechend umgekehrt die Erntemaschine mit Deaktivierung des Feldanschneidemodus vorteilhaft wieder in den vorigen Zustand zurückversetzen lässt. Dabei sorgt vorteilhaft die Steuereinrichtung dafür, dass Parametereinstellungen für eine zuvor eingenommene Konfiguration der Erntemaschine oder für eine sonstige abrufbar gespeicherte Konfiguration vorgegeben werden, und dass insbesondere eine entsprechende Einstellung ausgelöst wird.

Ganz allgemein kann es sich bei der wenigstens einen Funktionseinrichtung um jedwede Einrichtung handeln, die im Zusammenhang mit dem Betrieb der Erntemaschine steht und in einem Parameter eine Einstellbarkeit aufweist. Beispielsweise darunter fallen ein Erntevorsatz, dessen Schnitthöhe und/oder Fördergeschwindigkeit einstellbar sein kann, ein Einzugsaggregat, eine Konditioniereinrichtung, ein Auswurfbeschleuniger, die jeweils eine einstellbare Fördergeschwindigkeit aufweisen können, eine Überladeeinrichtung, die in deren Position (Dreh- bzw. Höhenwinkel) und/oder Auswurfwinkel (Auswurfklappe) verstellbar sein kann. Weitere Funktionseinrichtungen sind beispielsweise Automatiken wie ein Tempomat, eine Selbstlenkeinrichtung, eine Überladeautomatik, die jeweils aktivierbar und deaktivierbar sowie meist in verschiedenen weiteren Parametern einstellbar sind. Zahlreiche weitere Funktionseinrichtungen im diesem Sinne können an der Erntemaschine vorhanden sein, um bei Betrieb der Erntemaschine im Feldanschneidemodus berücksichtigt zu werden.

Erfindungsgemäß umfasst die erfindungsgemäß vorgesehene Vorgabe Parametereinstellungen für mehrere Funktionseinrichtungen. Da, wie bereits eingangs erwähnt, an Erntemaschinen beim Anschneiden durchaus eine Vielzahl von Einstellungen an unterschiedlichen Funktionseinrichtung vorzunehmen sind, wird so eine hohe Entlastung des Fahrers geschaffen, da ihm die Vielzahl von Einstellmaßnahmen abgenommen wird und somit praktisch kein Risiko besteht, Einstellmaßnahmen zu vergessen.

Gemäß einer einfachen Weiterbildung der Erfindung kann die Vorgabe der Parametereinstellung zunächst in Form einer Empfehlung, insbesondere durch optische Anzeige und/oder durch akustische Meldung an einen Bediener erfolgen. Dies hat für den Fahrer den Vorzug, dass er immer noch selbst entscheiden kann, ob er dieser Empfehlung folgt oder nicht.

Alternativ oder ergänzend ist auf besonders vorteilhafte Weise vorgesehen, dass die Steuereinrichtung mit der wenigstens einen Funktionseinrichtung in Signalverbindung steht, um an dieser mit Aktivierung des Feldanschneidemodus die zumindest eine Parametereinstellung vorzunehmen. In diesem Fall beschränkt sich die Vorgabe der Parametereinstellung also nicht auf eine reine Empfehlung an den Fahrer, sondern wird die Einstellung auch eigenständig durch entsprechende Ansteuerung durchgeführt. Es kann vorteilhaft vorgesehen sein, dass in diesem Sinne zunächst eine Empfehlung an den Fahrer ausgegeben wird und dass bei Bestätigung der Empfehlung - beispielsweise im Rahmen einer Abfrage über ein Bedienterminal - die Einstellung über die Steuereinrichtung vorgenommen wird.

Erfindungsgemäß weist die Steuereinrichtung Zugriff auf einen Datenspeicher auf, in dem Informationen hinsichtlich der im Rahmen des Feldanschneidemodus vorzugeben-den Parametereinstellungen hinterlegt sind, um mit Aktivierung des Feldanschneidemodus wiederabrufbar zu sein.

Dabei können in dem Datenspeicher verschiedene Sätze derartiger Informationen abrufbar hinterlegt sein, wobei die Informationssätze beispielsweise verschiedenen Fruchtarten, unterschiedlichen Bedienern und/oder sonstigen Betriebsbedingungen zuordenbar sind. Durch die Hinterlegung verschiedener Informationssätze kann der Fahrer demnach je nach Einsatzzweck auf geeignete Informationen zugreifen. Er könnte so die Maschine je nach Fruchtart (Mais oder Gras) schnell und einfach auf verschiedene Maschineneinstellungen konfigurieren. Ebenso wären personenbezogene Einstellungen möglich, wodurch sich fahrerspezifische Einstellungen schnell vornehmen ließen.

Erfindungsgemäß ist vorgesehen, dass die in dem Datenspeicher hinterlegten Informationen eine Auswahl vorzugebender Parameter beinhalten. Das heißt, dass die Informationen zunächst einmal Auskunft darüber geben, welche Parameter überhaupt im Rahmen des Feldanschneidemodus beeinflusst werden sollen. Erfindungsgemäß ist diese Auswahl durch den Fahrer editierbar, d.h. der Fahrer kann individuell entscheiden, ob und welche Parameter für den Betrieb im Feldanschneidemodus überhaupt eingestellt werden sollen. Dies kann ebenfalls im Rahmen eines Bedienterminals durch Aktivierung oder Deaktivierung einzelner Parameter durch den Fahrer erfolgen.

Erfindungsgemäß beinhalten die für einen einzelnen Parameter hinterlegten Informationen einen jeweiligen Einstellwert. Abhängig vom jeweiligen Parameter handelt es sich hierbei im einfachsten Fall um Schaltzustände wie "an" oder "aus" (z.B. für einen Tempomat oder eine Selbststeuereinrichtung) und/oder beispielsweise um Zahlenwerte (Höhe, Länge, Zeitdauer, Geschwindigkeit etc.), welche mit Einstellwerten der Funktionseinrichtungen korrespondieren.

Erfindungsgemäß sind einzelne im Rahmen des Feldanschneidemodus durch die Steuereinrichtung vorzugebende Parameter individuell auswählbar und in deren Einstellung editierbar. Dies bietet den Vorteil, dass der Fahrer den Grad der Einflussnahme beim Betrieb im Feldanschneidemodus frei bestimmen und flexibel anpassen kann.

Gemäß einer einfachen Weiterbildung ist der Feldanschneidemodus manuell aktivierbar. Dies kann vorteilhaft über ein Bedienterminal oder eine separate Schalteinrichtung im Zugriffsbereich des Fahrers (bevorzugt innerhalb der Fahrerkabine) erfolgen.

Zur weiteren Entlastung des Fahrers kann vorgesehen sein, dass die Steuereinrichtung den Feldanschneidemodus selbsttätig aktiviert, sobald von der Erntemaschine erfasste Zustandsinformationen auf das Anschneiden eines Feldes hinweisen. Dazu dienende Zustandsinformation könnten beispielsweise über maschineneigene Sensorik (Durchsatzsensor, Kamera, Ortsinformationen (z.B. satellitengestützte Ortung)) erhalten werden.

Grundsätzlich handelt es sich beim Anschneiden eines Feldes um die erste Fahrt über den gewachsenen Pflanzenbestand. Dementsprechend handelt es sich bei einer zum Anschneiden des Feldes geeigneten Konfiguration insbesondere um eine Konfiguration, mit der die Erntemaschine ein mit Pflanzenbestand bewachsenes Feld erstmals an einer Außenkante anschneidet und/oder durch ein solches Feld erstmals hindurchfährt.

Bei den im Rahmen des Feldanschneidemodus vorgebbaren Parametereinstellungen kann es sich um vielerlei Einstellungen handeln, die nicht zuletzt vom Ausstattungsgrad der Erntemaschine abhängen. Beispielsweise fallen darunter mögliche Einstellungen von: Schnitthöhe, Einstellung einer Selbstlenkeinrichtung (beispielsweise das Abstandsmaß, mit welchem die Erntemaschine relativ zum Pflanzenbestand durch das Feld gesteuert wird), Geschwindigkeit Erntevorsatz, Geschwindigkeit Einzugsorgan, Geschwindigkeit Konditioniereinrichtung, Geschwindigkeit Auswurfbeschleuniger, Spaltweite Auswurfbeschleuniger, Aktivierungszustand und/oder Fahrgeschwindigkeit Tempomat, Stellung Überladeeinrichtung, insbesondere deren Dreh-, Höhen- und/oder Klappenwinkel, Aktivierungszustand einer Selbstreinigungseinrichtung, Zustand Fahrantrieb (insbesondere der Aktivierungszustand einer Differentialsperre), Höhe Reifendruck, Zustand Beleuchtungseinrichtungen etc.. Zahlreiche weitere einstellbare Parameter sind denkbar.

Eine vorteilhafte Weiterbildung der Erfindung sieht vor, dass mit Aktivierung des Feldanschneidemodus weiterhin die Durchführung eines auf die Erntefahrt vorbereitenden Vorgangs, insbesondere ein Reinigungsvorgang an einer Funktionseinrichtung der Erntemaschine, ausgelöst wird. Bei einem solchen Vorgang kann es sich beispielsweise um das Öffnen und Schließen eines Trommelbodens (unterhalb der Häckseltrommel), um ein Zurück- und Vorfahren von in den Gutstrom ragenden Schneidmessern, um das Schleifen von Schneidmessern, um die Einstellung der Gegenschneide eines Häckselaggregats, um eine Reinigung optischer Elemente (z.B. Kamera, Infrarotsensoren), um Kalibriervorgänge oder dergleichen handeln. Eine automatische Durchführung entlastet dabei vorteilhaft den Fahrer, der diese Vorgänge vor Fahrtantritt sonst selber auslösen müsste. Vorteilhaft kann vorgesehen sein, dass eine Durchführung des jeweiligen Vorgangs an eine vorige Zustandsabfrage gekoppelt ist und nur bei erkannter Notwendigkeit erfolgt (z.B. Reinigung des Trommelbodens nur bei Verschmutzung oder dergleichen).

Damit nach dem Anschneiden des Feldes die Erntemaschine einfach und fehlerfrei wieder für die übliche Erntefahrt (beim Feldhäcksler kann dies beispielsweise sein: Überladen mit seitlich geschwenkter Überladeeinrichtung) nutzbar ist, sollte vorteilhaft der Feldanschneidemodus deaktivierbar sein, wobei die Steuereinrichtung betreibbar ist, nach Deaktivierung des Feldanschneidemodus Parametereinstellungen für eine zuvor eingenommene Konfiguration der Erntemaschine oder für eine sonstige abrufbar gespeicherte Konfiguration vorzugeben, und insbesondere eine entsprechende Einstellung auszulösen. Auf diese Weise erreicht der Fahrer, dass die Erntemaschine einen Ausgangszustand oder eine sonstige gewünschte Konfiguration schnell wieder einnimmt.

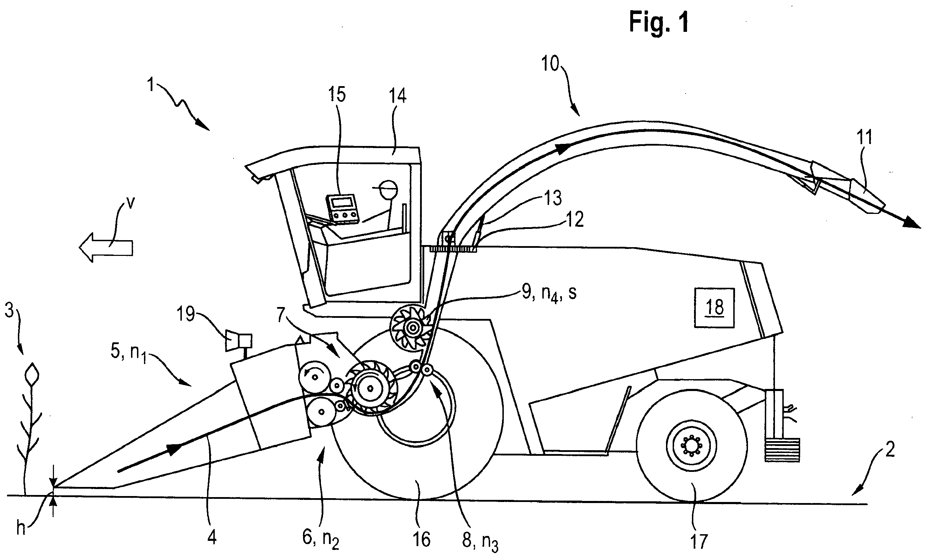

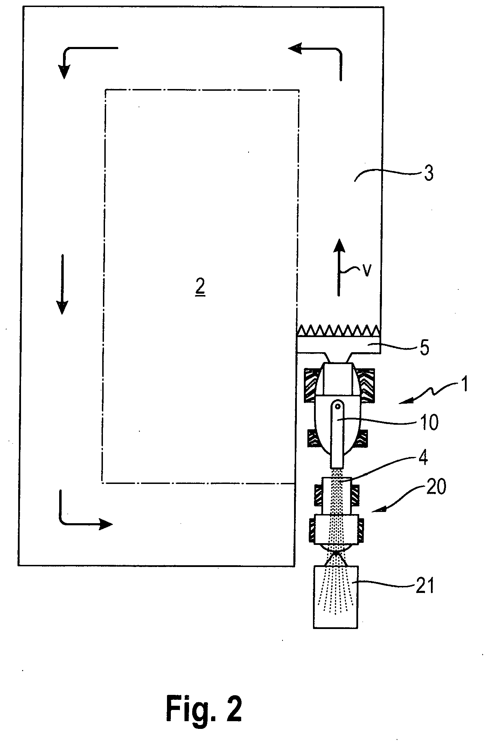

Die Erfindung wird im Folgenden unter Bezugnahme auf die Fig. 1 und 2 näher erläutert. Daraus werden auch weitere vorteilhafte Wirkungen ersichtlich. Es zeigen:
- Fig. 1: einen Feldhäcksler in schematischer Seitenansicht bei der Erntefahrt,
- Fig. 2: einen Feldhäcksler sowie einen begleitenden Traktor, der einen Transportanhänger zieht, beim Anschneiden eines Feldes in schematischer Draufsicht.

Fig. 1 zeigt gemäß dem einzigen Ausführungsbeispiel eine erfindungsgemäße Erntemaschine in Form eines Feldhäckslers 1 in schematischer Ansicht von der Seite. Der Feldhäcksler 1 fährt über ein Feld 2, um einen gewachsenen Pflanzenbestand 3 (typischerweise Mais) zu ernten. Auf für sich bekannte Weise ist der Feldhäcksler 1 mit einem Erntevorsatz 5 ausgestattet, um mit diesem den oberen Teil der Maispflanze 3 von Feld zu trennen und dem Feldhäcksler 1 zur weiteren Bearbeitung als Erntegut 4 zuzuführen. Das so aufgenommene Erntegut 4 wird entlang der eingezeichneten, mit Pfeilen versehenen Linie durch den Feldhäcksler 1 gefördert, um anschließend auf ein (hier nicht dargestelltes) Transportfahrzeug überladen zu werden.

Dem Erntevorsatz 5 bezogen auf die Gutstromrichtung nachgelagert (stromabwärts) befindet sich ein Einzugsorgan 6, welches das Erntegut 4 vorpresst und mit einer definierten Geschwindigkeit einem Häckselaggregat 7 zuführt. Das Häckselaggregat 7 ist mit einer rotierenden, mit Messern bestückten Häckseltrommel ausgestattet, um das Erntegut 4 in Zusammenwirkung mit einer ruhenden Gegenschneide in Partikel gewünschter Schnittlänge zu zerkleinern. Das so gehäckselte Erntegut 4 gelangt durch einen unterhalb einer Fahrerkabine 14 nach hinten aufsteigenden Förderschacht durch eine (optionale) Konditioniereinrichtung 8, um dann von einem Auswurfbeschleuniger 9 auf eine zum Auswurf durch eine Überladeeinrichtung 10 geeignete Geschwindigkeit beschleunigt zu werden.

Der Erntevorsatz 5, das Einzugsorgan 6, die Konditioniereinrichtung 8 und/oder der Auswurfbeschleuniger 9 sind in deren Geschwindigkeiten, d.h. insbesondere in deren Drehzahlen n₁, n₂, n₃, n₄ einstellbar, um an diesen Funktionseinrichtungen insbesondere die Fördergeschwindigkeit des Ernteguts, die erzielte Schnittlänge, eine Zerkleinerungswirkung und/oder die Auswurfleistung verändern zu können. Beim Auswurfbeschleuniger ist zudem eine Spaltweite s (zwischen Auswurfpaddel und Gehäuse) veränderbar, womit ebenfalls dessen erzielbare Wurfleistung veränderbar ist.

Der Erntevorsatz 5 ist weiterhin in dessen Höheneinstellung anpassbar, so dass unterschiedliche Schnitthöhen h damit erzielbar sind. Je geringer die Schnitthöhe h eingestellt wird, desto näher kommt der Erntevorsatz 5 dabei dem Feldboden. Mit kurzer Schnitthöhe h nimmt daher die Gefahr von Beschädigungen des Erntevorsatzes 5 insbesondere bei unebenem und/oder verunreinigtem Gelände zu.

An dem Erntevorsatz 5 kann weiterhin eine Selbstlenkeinrichtung 19 angeordnet sein, welche anhand einer Erfassung (hier: optisch per Kamera, kann aber auch mechanisch per Taster) des vor dem Feldhäcksler 1 befindlichen Pflanzenbestands 3 eine automatische Lenkung des Feldhäckslers 1 relativ zum Pflanzenbestand 3 vornehmen kann. Dabei kann der Feldhäcksler 1 insbesondere mit einem definierbaren Seitenabstand zu gepflanzten Maisreihen gelenkt werden, um das Feld 2 entlang der Bepflanzungsreihen zu ernten.

Die Überladeeinrichtung 10 in Form eines sogenannten "Auswurfkrümmers" ist auf für sich bekannte Weise über einen Höhenstellzylinder 13 in deren Höhe verstellbar, über einen Drehkranz 12 um eine vertikale Drehachse seitlich schwenkbar und weist am maschinenabgewandten Ende der Überladeeinrichtung 10 eine Auswurfklappe 11 auf, die ebenfalls schwenkbar ist, um einen Abwurfwinkel des ausgeworfenen Ernteguts 4 vorzugeben. Es sei angemerkt, dass der Feldhäcksler 1 in Fig. 1 aus Darstellungsgründen mit nach hinten geschwenkter Überladeeinrichtung 10 gezeigt ist. Bei normaler Erntefahrt (über ein bereits angeschnittenes Feld) ist die Überladeeinrichtung 10 üblicherweise seitlich mittels der Drehkranzes 12 verschwenkt, ragt also aus der Zeichnungsebene heraus (oder in diese hinein).

Ein heckseitig angeordneter Antriebsmotor 18 dient zum Antrieb der Arbeitsorgane des Feldhäckslers 1 sowie zum Fahrantrieb der Vorderräder 16 und ggf. der Hinterräder 17 (bei Zuschaltung eines Allradantriebs) sowie zur Versorgung von sonstigen Funktionseinrichtungen.

In der Fahrerkabine 14 ist für einen Fahrer zugänglich eine Steuer-, Bedien- und Anzeigeeinrichtung 15 angeordnet, die mit den wesentlichen Funktionseinrichtungen des Feldhäckslers 1 in Signalverbindung steht, so dass der Fahrer über die Steuer-, Bedien- und Anzeigeeinrichtung 15 auf eine Vielzahl von an der Maschine verfügbaren Funktionen zugreifen, insbesondere diese überwachen und steuern kann. Es kann vorgesehen sein, dass einige der Funktionen ergänzend oder alternativ über zusätzliche in der Fahrerkabine 14 angeordnete Bedienelemente steuerbar sind, wie beispielsweise über Bedienhebel, Schaltknöpfe, Drehregler und dergleichen, um einen besonders schnellen Zugriff darauf zu haben.

Fährt ein Fahrer mit dem Feldhäcksler 1 auf ein neu zu bearbeitendes Feld, so muss er den Feldhäcksler 1 zumindest bei der ersten Umrundung entlang der Außenkanten des Feldes auf besondere Weise einstellen. Unter anderem kann beispielsweise der Überladevorgang mittels der Überladeeinrichtung 10 aus Platzgründen nur nach hinten stattfinden, was im späteren Erntebetrieb im angeschnittenen Feld aufgrund der dabei auftretenden erschwerten Bedingungen (schlechtere Sichtbarkeit, höhere Wurfweite und damit verringerte Treffgenauigkeit) vermieden wird. Auch bei einer ersten Durchquerung eines Feldes ("Durchstechen") besteht die Notwendigkeit des Überlades nach hinten. Bei Fahrten am Feldrand muss der Fahrer zudem darauf achten, Beschädigungen des Erntevorsatzes 5 zu vermeiden, die z.B. bei Kollision des Erntevorsatzes 5 mit Verunreinigungen des Bodens wie Steinen, Abfällen und/oder auf das Feld ragenden Pflanzenbeständen oder sonstigen störenden Objekten, auch benachbarter Bodenflächen (Felder, Wälder, bebaute Flächen etc.) leicht auftreten können.

Erfindungsgemäß wird der Fahrer bei der Vornahme der Vielzahl notwendiger Einstellungen beim Anschneiden des Feldes durch eine von der Steuer-, Bedien- und Anzeigeeinrichtung 15 ausführbare Automatik unterstützt. Die Steuer-, Bedien- und Anzeigeeinrichtung 15 lässt sich dazu - beispielsweise durch manuelle Betätigung per Knopfdruck - in einem Feldanschneidemodus betreiben, um für eine Vielzahl durch den Fahrer individuell auswählbarer Funktionseinrichtungen jeweils zumindest eine Parametereinstellung vorzugeben, mit welcher der Feldhäcksler 1 in eine zum Anschneiden des Feldes geeignete Konfiguration bringbar ist.

Fig. 2 veranschaulicht eine solche Konfiguration anhand einer Draufsicht auf einen schematisch gezeigten Feldhäcksler 1. Es handelt sich bei dem Feldhäcksler gemäß Fig. 2 beispielsweise um einen wie anhand von Fig. 1 erläuterten Feldhäcksler. Ein Feld 2 mit rechteckiger Grundfläche ist mit einem Pflanzenbestand 3 bewachsen. Damit das Feld 2 abgeerntet werden kann, muss der Feldhäcksler 1 das Feld 2 zunächst entlang dessen Außenkanten umrunden, wie durch die Wegpfeile angedeutet. Der Feldhäcksler 1 ist dazu zunächst in einen Feldanschneidemodus geschaltet worden, wobei die Steuer-, Bedien- und Anzeigeeinrichtung 15 verschiedene Maßnahmen durchgeführt hat. Unter anderem ist Überladeeinrichtung 10 mittels des Drehkranzes 12 in eine nach hinten weisende Richtung geschwenkt. Die Auswurfklappe 11 ist nun vollständig geöffnet und der Höhenstellzylinder 13 ist ausgefahren, um das Erntegut 4 mit maximaler Weite in einen hinter dem Feldhäcksler 1 von einem Traktor 20 gezogenen Transportanhänger 21 werfen zu können. Zu diesem Zweck ist weiterhin die Spaltweite s des Auswurfbeschleunigers 9 auf ein minimales Maß eingestellt worden. Optional könnte auch die Drehzahl n₄ des Beschleunigers 9 erhöht werden, um die Auswurfleistung weiter zu erhöhen.

Darüber hinaus ist eine erhöhte Schnitthöhe h eingestellt worden, um Beschädigungen am Erntevorsatz 5 zu vermeiden. Eine vom Tempomat vorgebbare Fahrgeschwindigkeit v ist auf ein reduziertes Maß eingestellt worden.

Zahlreiche weitere Parametereinstellungen können im Rahmen des Feldanschneidemodus vorgenommen werden, die jeweils vom Fahrer auswählbar sind. D.h. der Fahrer kann individuell auswählen, welche Parameter im Rahmen des Feldanschneidemodus überhaupt beeinflusst werden sollen. Weiterhin kann der Fahrer für jeden ausgewählten Parameter einen gewünschten Einstellwert vorgeben. Abhängig von der betroffenen Funktionseinrichtung kann es sich dabei um Zahlenwerte (Schnitthöhe, Klappenwinkel, Drehzahl, Fahrgeschwindigkeit und dergleichen) und/oder um Aktivierungszustände (Autopilot an/aus, automatische Überladesteuerung an/aus, Tempomat an/aus) handeln.

Vorteilhaft kann vorgesehen sein, dass mit der Aktivierung des Feldanschneidemodus auch ein auf die Erntefahrt vorbereitender Vorgang ausgelöst wird. Dabei kann es sich beispielsweise um einen zweckmäßigerweise vor Fahrantritt auszuführenden Reinigungsvorgang an einer Funktionseinrichtung (z.B. Reinigung des Trommelbodens unterhalb der Häckseltrommel) des Feldhäckslers 1 oder um einen Kalibriervorgang handeln.

Nach Beendigung des Feldanschneidens lässt sich der Feldanschneidemodus wieder deaktivieren, wobei die Bedien-, Steuer- und Anzeigeeinrichtung 15 dann Parametereinstellungen für eine zuvor eingenommene Konfiguration des Feldhäckslers 1 oder für eine sonstige abrufbar gespeicherte Konfiguration vorgibt und die Maschine entsprechend einstellt.

Für den Fahrer stellt die erfindungsgemäße Parametervorgabe für das Feldanschneiden eine deutliche Entlastung dar, da sich der Feldhäcksler 1 einfach, schnell und sicher in eine dem Einsatzzweck "Feldanschneiden" angepasste Konfiguration - sowie daraus zurück - versetzen lässt. Verschiedene an dem Feldhäcksler 1 vorhandene Funktionen (auch: Automatiken) können damit schnell mit anderen Einstellungen genutzt werden, ohne dass eine Verstellung im Einzelnen erforderlich wird. Weiterhin ist damit die Gefahr von Fehleinstellungen reduziert.

### Bezugszeichenliste

- 1: Feldhäcksler
- 2: Feld
- 3: Pflanzenbestand
- 4: Erntegut
- 5: Erntevorsatz
- 6: Einzugsorgan
- 7: Häckselaggregat
- 8: Konditioniereinrichtung
- 9: Auswurfbeschleuniger
- 10: Überladeeinrichtung
- 11: Auswurfklappe
- 12: Drehkranz
- 13: Höhenstellzylinder
- 14: Fahrerkabine
- 15: Steuer-, Bedien- und Anzeigeeinrichtung
- 16: Vorderrad
- 17: Hinterrad
- 18: Antriebsmotor
- 19: Selbstlenkeinrichtung
- 20: Traktor
- 21: Transportanhänger

- h: Schnitthöhe
- v: Fahrgeschwindigkeit
- n₁: Geschwindigkeit Erntevorsatz
- n₂: Geschwindigkeit Einzug
- n₃: Geschwindigkeit Konditioniereinrichtung
- n₄: Geschwindigkeit Auswurfbeschleuniger
- s: Spaltweite Auswurfbeschleuniger

## Patentansprüche

1. Selbstfahrende landwirtschaftliche Erntemaschine (1), insbesondere Feldhäcksler, mit einem Erntevorsatz (5) zur Aufnahme von Erntegut (4) von einem Feld (2) und wenigstens einem Arbeitsorgan (6, 7, 8, 9, 10, 11) zur Bearbeitung und/oder Förderung des Ernteguts (4), wobei wenigstens eine der Erntemaschine (1) zugeordnete Funktionseinrichtung, wie beispielsweise der Erntevorsatz (5), das wenigstens eine Arbeitsorgan (6, 7, 8, 9, 10,11) und/oder eine sonstige mit dem Betrieb der Erntemaschine (1) in Zusammenhang stehende Einrichtung (12, 13, 18, 19) zum Zweck der Anpassung an unterschiedliche Einsatzbedingungen jeweils in zumindest einem Parameter (h, v, n₁, n₂, n₃, n₄, s) einstellbar ist,
mit einer Steuerungseinrichtung (15), die in einem Feldanschneidemodus betreibbar ist, um für wenigstens den Erntevorsatz (5) und das wenigstens eine Arbeitsorgan (6, 7, 8, 9, 10, 11) zumindest eine Parametereinstellung vorzugeben, mit welcher die Erntemaschine (1) in eine zum Anschneiden des Feldes (2) geeignete Konfiguration bringbar ist,
**dadurch gekennzeichnet, dass** die Vorgabe Parametereinstellungen für mehrere Funktionseinrichtungen (5, 6, 7, 8, 9, 10, 11, 12, 13, 18, 19) umfasst,
wobei die Steuereinrichtung (15) Zugriff auf einen Datenspeicher aufweist, in dem Informationen hinsichtlich der im Rahmen des Feldanschneidemodus vorzugebenden Parametereinstellungen hinterlegt sind, um mit Aktivierung des Feldanschneidemodus wiederabrufbar zu sein,
wobei die hinterlegten Informationen eine Auswahl vorzugebender Parameter (h, v, n₁, n₂, n₃, n₄, s) beinhalten,
wobei die für einen einzelnen Parameter (h, v, n₁, n₂, n₃, n₄, s) hinterlegten Informationen einen jeweiligen Einstellwert beinhalten,
wobei einzelne im Rahmen des Feldanschneidemodus durch die Steuereinrichtung (15) vorzugebende Parameter (h, v, n₁, n₂, n₃, n₄, s) individuell auswählbar und in deren Einstellung editierbar sind,
wobei der Fahrer individuell entscheiden kann, ob und welche Parameter für den Betrieb im Feldanschneidemodus überhaupt eingestellt werden sollen.

2. Erntemaschine nach Anspruch 1, **dadurch gekennzeichnet, dass** die Vorgabe in Form einer Empfehlung, insbesondere durch optische Anzeige und/oder durch akustische Meldung an einen Bediener erfolgt.

3. Erntemaschine nach einem der vorigen Ansprüche, **dadurch gekennzeichnet, dass** die Steuereinrichtung (15) mit der wenigstens einen Funktionseinrichtung (5, 6, 7, 8, 9, 10, 11, 12, 13, 18, 19) in Signalverbindung steht, um an dieser mit Aktivierung des Feldanschneidemodus die zumindest eine Parametereinstellung vorzunehmen.

4. Erntemaschine nach Anspruch 1, **dadurch gekennzeichnet, dass** in dem Datenspeicher verschiedene Sätze derartiger Informationen abrufbar hinterlegbar sind, wobei die Informationssätze beispielsweise verschiedenen Fruchtarten, unterschiedlichen Bedienern und/oder sonstigen Betriebsbedingungen zuordenbar sind.

5. Erntemaschine nach einem der vorigen Ansprüche, **dadurch gekennzeichnet, dass** der Feldanschneidemodus manuell aktivierbar ist.

6. Erntemaschine nach einem der vorigen Ansprüche, **dadurch gekennzeichnet, dass** die Steuereinrichtung (15) den Feldanschneidemodus selbsttätig aktiviert, sobald von der Erntemaschine (1) erfasste Zustandsinformationen auf das Anschneiden eines Feldes (2) hinweisen.

7. Erntemaschine nach einem der vorigen Ansprüche, **dadurch gekennzeichnet, dass** es sich bei der zum Anschneiden des Feldes (2) geeigneten Konfiguration um eine Konfiguration handelt, mit der die Erntemaschine (1) ein mit Pflanzenbestand (3) bewachsenes Feld (2) erstmals an einer Außenkante anschneidet und/oder durch ein solches Feld (2) erstmals hindurchfährt.

8. Erntemaschine nach einem der vorigen Ansprüche, **dadurch gekennzeichnet, dass** es sich bei einer im Rahmen des Feldanschneidemodus vorgebbaren Parametereinstellung um eine Einstellung handelt wie: Schnitthöhe (h), Einstellung einer Selbstlenkeinrichtung, Geschwindigkeit Erntevorsatz (n₁), Geschwindigkeit Einzugsorgan (n₂), Geschwindigkeit Konditioniereinrichtung (n₃), Geschwindigkeit Auswurfbeschleuniger (n₄), Spaltweite Auswurfbeschleuniger (s), Aktivierungszustand und/oder Fahrgeschwindigkeit (v) Tempomat, Stellung Überladeeinrichtung, insbesondere deren Dreh-, Höhen- und/oder Klappenwinkel, Aktivierungszustand einer Selbstreinigungseinrichtung, Zustand Fahrantrieb, Höhe Reifendruck, Zustand Beleuchtungseinrichtungen.

9. Erntemaschine nach einem der vorigen Ansprüche, **dadurch gekennzeichnet, dass** mit Aktivierung des Feldanschneidemodus die Durchführung eines auf die Erntefahrt vorbereitenden Vorgangs, insbesondere ein Reinigungsvorgang an einer Funktionseinrichtung der Erntemaschine (1), ausgelöst wird.

10. Erntemaschine nach einem der vorigen Ansprüche, **dadurch gekennzeichnet, dass** der Feldanschneidemodus deaktivierbar ist, wobei die Steuereinrichtung (15) betreibbar ist, nach Deaktivierung des Feldanschneidemodus Parametereinstellungen für eine zuvor eingenommene Konfiguration der Erntemaschine (1) oder für eine sonstige abrufbar gespeicherte Konfiguration vorzugeben, und insbesondere eine entsprechende Einstellung auszulösen.

## Claims

1. A self-propelled agricultural harvester (1), in particular a forage harvester, comprising a front harvesting attachment (5) for picking up crop material (4) from a field (2) and at least one working member (6, 7, 8, 9, 10, 11) for processing and/or conveying the crop material (4), wherein at least one functional device associated with the harvester (1) like for example the front harvesting attachment (5), the at least one working member (6, 7, 8, 9, 10, 11) and/or another device (11, 12, 13, 18, 19) related to operation of the harvester (1) is adjustable in at least one respective parameter (h, v, n₁, n₂, n₃, n₄, s) for the purposes of adaptation to different conditions of use,
comprising a control device (15) operable in a initial field cutting mode in order to predetermine for at least the front harvesting attachment (5) and the at least one working member (5, 6, 7, 8, 9, 10, 11) at least one parameter setting with which the harvester (1) can be put into a configuration suitable for initial cutting of the field (2),
**characterised in that** the presetting includes parameter settings for a plurality of functional devices (5, 6, 7, 8, 9, 10, 11, 12, 13, 18, 19), wherein the control device (15) has access to a data memory in which information in respect of the parameter settings to be predetermined in the context of the initial field cutting mode are stored to be retrievable with activation of the initial field cutting mode,
wherein the stored information includes a selection of parameters (h, v, n₁, n₂, n₃, n₄, s) to be predetermined,
wherein the information stored for an individual parameter (h, v, n₁, n₂, n₃, n₄, s) includes a respective setting value,
wherein individual parameters (h, v, n₁, n₂, n₃, n₄, s) which are to be predetermined in the context of the initial field cutting mode by the control device (15) can be individually selected and edited in setting thereof, wherein the driver can individually decide whether and which parameters are to be set at all for operation in the initial field cutting mode

2. A harvester according to claim 1 **characterised in that** presetting is effected in the form of a recommendation, in particular by optical display and/or by acoustic notification to an operator.

3. A harvester according to one of the preceding claims **characterised in that** the control device (15) is in signal communication with the at least one functional device (5, 6, 7, 8, 9, 10, 11, 12, 13, 18, 19) in order to implement the at least one parameter setting at said functional device with activation of the initial field cutting mode.

4. A harvester according to claim 1 **characterised in that** various sets of such information are stored in retrievable fashion in the data memory, wherein the information sets can be associated for example with different kinds of crops, different operators and/or other operating conditions.

5. A harvester according to one of the preceding claims **characterised in that** the initial field cutting mode is manually activatable.

6. A harvester according to one of the preceding claims **characterised in that** the control device (15) automatically activates the initial field cutting mode as soon as state information detected by the harvester (1) points to initial cutting of a field (2).

7. A harvester according to one of the preceding claims **characterised in that** the configuration suitable for initial cutting of the field (2) involves a configuration with which the harvester (1) starts to cut a field (2) grown with a plant stand (3) for the first time at an outside edge and/or passes through such a field (2) for the first time.

8. A harvester according to one of the preceding claims **characterised in that** the parameter setting which can be predetermined in the context of the initial field cutting mode involves a setting like: cutting height (h), setting of a self-steering device, speed of a front harvesting attachment (n₁), speed of an intake member (n₂), speed of a conditioning device (n₃), speed of an ejection accelerating device (n₄), gap width of an ejection accelerating device (s), activation state and/or travel speed (v) of a cruise control device, position of a transloading device, in particular its rotational, height and/or flap angle, activation state of a self-cleaning device, state of travel drive, level of tyre pressure, and state of lighting devices.

9. A harvester according to one of the preceding claims **characterised in that** implementation of a process preparing for the harvesting travel, in particular a cleaning operation at a functional device of the harvester (1), is triggered with activation of the initial field cutting mode.

10. A harvester according to one of the preceding claims **characterised in that** the initial field cutting mode can be deactivated, wherein the control device (15) is operable after deactivation of the initial field cutting mode to predetermine parameter settings for a previously adopted configuration of the harvester (1) or for another retrievably stored configuration and in particular to trigger a corresponding setting.

## Revendications

1. Machine de récolte agricole automotrice (1), en particulier ensileuse, avec un outil frontal de récolte (5) pour ramasser un produit de récolte (4) d'un champ (2) et au moins un organe de travail (6, 7, 8, 9, 10, 11) pour traiter et/ou transporter le produit de récolte (4), au moins un dispositif fonctionnel associé à la machine de récolte (1), comme par exemple l'outil frontal de récolte (5), ledit au moins un organe de travail (6, 7, 8, 9, 10) et/ou un autre dispositif (11, 12, 13, 18, 19) en relation avec le fonctionnement de la machine de récolte (1) étant réglables en ce qui concerne au moins un paramètre (h, v, n₁, n₂, n₃, n₄, s) aux fins d'adaptation à différentes conditions d'utilisation,
comprenant un dispositif de commande (15) qui peut être utilisé dans un mode d'amorce de coupe de champ pour prescrire, pour au moins l'outil frontal de récolte (5) et/ou ledit au moins un organe de travail (5, 6, 7, 8, 9, 10, 11), au moins un réglage de paramètre avec lequel la machine de récolte (1) peut être mise dans une configuration adaptée à l'amorce de coupe du champ (2),
**caractérisée en ce que** la prescription comprend des réglages de paramètres pour plusieurs dispositifs fonctionnels (5, 6, 7, 8, 9, 10, 11, 12, 13, 18, 19), le dispositif de commande (15) présentant un accès à une mémoire de données dans laquelle des informations concernant les réglages de paramètres à prescrire dans le cadre du mode d'amorce de coupe de champ sont stockées pour pouvoir être rappelées lorsque le mode d'amorce de coupe de champ est activé,
les informations stockées contenant une sélection de paramètres (h, v, n₁, n₂, n₃, n₄, s) à prescrire,
les informations stockées pour un paramètre (h, v, n₁, n₂, n₃, n₄, s) individuel contenant une valeur de réglage respective,
des paramètres (h, v, n₁, n₂, n₃, n₄, s) individuels à prescrire dans le cadre du mode d'amorce de coupe de champ pouvant être sélectionnés individuellement, et leur réglage édité par le dispositif de commande (15), le conducteur pouvant décider individuellement si ou quels paramètres doivent éventuellement être réglés pour le fonctionnement en mode d'amorce de coupe de champ.

2. Machine de récolte selon la revendication 1, **caractérisée en ce que** la prescription prend la forme d'une recommandation, en particulier d'une indication optique et/ou d'un message acoustique à un opérateur.

3. Machine de récolte selon l'une des revendications précédentes, **caractérisée en ce que** le dispositif de commande (15) est en liaison de signalisation avec le au moins un dispositif fonctionnel (5, 6, 7, 8, 9, 10, 11, 12, 13, 18, 19) pour procéder audit au moins un réglage de paramètre sur celui-ci lorsque le mode d'amorce de coupe de champ est activé.

4. Machine de récolte selon la revendication 1, **caractérisée en ce que** différents jeux de telles informations peuvent être stockés dans la mémoire de données de manière à pouvoir être rappelés, les jeux d'informations pouvant être associés par exemple à différentes cultures, différents opérateurs et/ou d'autres conditions d'utilisation.

5. Machine de récolte selon une des revendications précédentes, **caractérisée en ce que** le mode d'amorce de coupe de champ peut être activé manuellement.

6. Machine de récolte selon l'une des revendications précédentes, **caractérisée en ce que** le dispositif de commande (15) active automatiquement le mode d'amorce de coupe de champ dès que des informations d'état détectées par la machine de récolte (1) indiquent l'amorce de coupe d'un champ (2).

7. Machine de récolte selon l'une des revendications précédentes, **caractérisée en ce que** la configuration adaptée à l'amorce de coupe du champ (2) est une configuration dans laquelle la machine de récolte (1) coupe pour la première fois un champ (2) recouvert d'une culture (3) au niveau d'un bord extérieur et/ou traverse pour la première fois un tel champ (2).

8. Machine de récolte selon l'une des revendications précédentes, **caractérisée en ce que** le réglage de paramètre prescriptible dans le cadre du mode d'amorce de coupe de champ est un réglage tel que : hauteur de coupe (h), réglage d'un dispositif d'autoguidage, vitesse de l'outil frontal de récolte (n₁), vitesse de l'organe d'alimentation (n₂), vitesse du dispositif de conditionnement (n₁), vitesse de l'accélérateur de décharge (n₄), largeur de fente de l'accélérateur de décharge (s), état d'activation et/ou vitesse de marche (v) du régulateur de vitesse, position du dispositif de transbordement, en particulier son angle de rotation, d'élévation et/ou de volet, état d'activation d'un dispositif d'autonettoyage, état du groupe propulseur, niveau de pression des pneus, état des dispositifs d'éclairage.

9. Machine de récolte selon l'une des revendications précédentes, **caractérisée en ce que**, lorsque le mode d'amorce de coupe de champ est activé, l'exécution d'une opération préparatoire au parcours de récolte, en particulier d'une opération de nettoyage, est déclenchée sur un dispositif fonctionnel de la machine de récolte (1).

10. Machine de récolte selon l'une des revendications précédentes, **caractérisée en ce que** le mode d'amorce de coupe de champ peut être désactivé, le dispositif de commande (15) pouvant être utilisé, après désactivation du mode d'amorce de coupe de champ, afin de prescrire des réglages de paramètres pour une configuration précédemment adoptée de la machine de récolte (1) ou pour une autre configuration enregistrée de manière à pouvoir être rappelée, et en particulier pour déclencher un réglage correspondant.
